# EUROPÄISCHE PATENTSCHRIFT

(11) **EP 1 655 172 B1**
(45) Veröffentlichungstag und Bekanntmachung des Hinweises auf die Patenterteilung: **17.02.2010**
(21) Anmeldenummer: 05024313.8
(22) Anmeldetag: 08.11.2005
(51) Int. Cl.: B60P 7/08

(54) **Befestigungsvorrichtung zum Befestigen eines Trolleys**
Fastening device for fixing a trolley
Dispositif de fixation pour la fixation d'un chariot

(30) Priorität: 08.11.2004 DE 102004053810; 08.11.2004 US 626050 P
(43) Veröffentlichungstag der Anmeldung: 10.05.2006
(73) Patentinhaber: Airbus Deutschland GmbH, 21129 Hamburg (DE)
(72) Erfinder: Hartmann, Andreas, 21220 Seevetal (DE); Giesa, Hans-Gerhard, 20257 Hamburg (DE); Rathmann-Ramlow, Thomas, 59469 Ense (DE)
(74) Vertreter: Dilg, Andreas

(56) Entgegenhaltungen:
- EP-A1- 0 670 244
- EP-A1- 1 266 792
- DE-U1- 20 220 289
- DE-U1- 29 500 366
- US-A- 3 751 101
- US-A- 4 900 203
- US-A1- 2003 034 686
- US-A1- 2003 145 434
- US-A1- 2004 262 905
- US-B1- 6 406 230

## Beschreibung

Die Erfindung betrifft eine Befestigungsvorrichtung, ein Verfahren zum Herstellen einer Befestigungsvorrichtung und eine Verwendung einer Befestigungsvorrichtung zum Befestigen eines Trolleys.

Die Sicherung eines in einer Kabine eines Flugzeugs eingesetzten Trolleys oder Servierwagens, insbesondere bei Turbulenzen während des Flugbetriebs, ist wichtig, um ein ausreichend hohes Maß an Sicherheit für Passagiere in einem Passagierflugzeug zu gewährleisten.

Gemäß dem Stand der Technik wird bei erwarteten Turbulenzen versucht, Trolleys rechtzeitig in einer Galley (Bordküche) zu verstauen und dort zu verriegeln. Bei unerwartet auftretenden Turbulenzen ist dies allerdings schwierig.

Um einen Trolley in der Kabine zu sichern, werden gemäß dem Stand der Technik sogenannte "Trolley Tie-Down Fittings" genutzt. Dabei handelt es sich um in dem Boden versenkbare Bolzen, auf deren Kopf ein mit einem entsprechenden Gegenstück ausgerüsteter Trolley aufgeschoben und dadurch gesichert werden kann.

Ein anderes Konzept sind "Trolley Parking Systems", bei denen ein Trolley mittels an einer Monumentenwand befestigten Schwenkarmen und Kipphebeln gesichert wird.

Für eine Sicherung an Monumentenwänden sind auch einfache Gurtsysteme bekannt, mit denen ein Trolley an der Wand (zum Beispiel von einem Lavatory, das heißt einem Waschraum) festgezurrt werden kann.

In US 2002/0014556A1 ist ein in einen Trolley eingebautes Sicherungssystem beschrieben, das auf einem durch einen Gravitationssender aktivierbaren Rückhaltemechanismus beruht. Als Rückhaltemechanismus werden in dem Trolley integrierte Riegel eingesetzt, die bei Aktivierung unter die Passagiersitze am Gang ausgefahren werden können. Als alternativer Rückhaltemechanismus wird in US 2002/0014556A1 ein Vakuumsaugsystem offenbart, mit dem sich der Trolley nach Aktivierung am Kabinenboden festsaugt.

Ein anderes Ansaugsystem ist in US 3,823,900 beschrieben. Darin wird eine Lösung offenbart, mit dem der Trolley durch in die Armlehnen der Passagiersitze am Kabinengang integrierte Ventile, die mit einem Vakuumsystem verbunden sind, angesaugt wird.

WO 01/15973 offenbart, einen Trolley durch eine Schiene entlang eines Kabinengangs zu sichern. Hierzu wird am Trolley vom und hinten je eine senkbarer Sporn angebracht, der zur Sicherung des Trolleys in die Schiene eingelassen wird.

Die US 6,406,230 B1 beschreibt eine Spannvorrichtung, wobei ein Gurt aus einer durch eine Feder vorgespannten Bandrolle herausgezogen werden kann, wenn ein Sperrvorrichtungsmechanismus entriegelt wird.

Die DE 202 20 289 U1 beschreibt eine Transportsicherungseinrichtung mit zumindest einer Querstrebe und zumindest zwei Halteelementen zur Anlage an zu sicherndes Transportgut und/oder zum Einhängen an dem zu sichernden Transportgut, wobei die Halteelemente an der zumindest einen Querstrebe beabstandet zueinander befestigt sind.

Die US 4,900,203 beschreibt ein Ladungssicherungssystem, welches eine ladungstragende Struktur beinhaltet, die eine Seitenabstützung und eine zweite Abstützung aufweist.

Die DE 295 00 366 U1 beschreibt eine Schnellbefestigungsvorrichtung für lose Gegenstände in Transportmitteln.

Die US 2003/0145434 A1 beschreibt einen Bandspanner mit einer selbstspannenden Vorrichtung.

Ein gattungsgemäßes trolley ist in des US 3 751 101 offenbart.

Allerdings weisen die bekannten Lösungen zum Befestigen eines Trolleys eine Reihe von schwerwiegenden Nachteilen auf.

Mit den bekannten Lösungen werden Trolleys an zusätzlichen Orten außerhalb der Galleys (Bordküche) befestigt. Die hierzu innerhalb der Kabine nutzbaren Orte liegen im Bereich der Türen, Lavatories und des Trolleylifts. Um einen Trolley zu sichern, muss er zunächst an einen dieser dafür vorgesehenen Plätze geschoben werden. Bei unerwarteten starken Turbulenzen (zum Beispiel "Clear Air Turbulences") während des Service ist dies kaum zu bewältigen.

Für das "Trolley Tie-Down Fitting" sind Modifikationen der Trolleys erforderlich. Auch bei den genannten Patenten sind erhebliche Modifikationen der Trolleys bzw. der Passagiersitze erforderlich. Die Notwendigkeit der Modifikationen der Trolleys stellt einen erheblichen Nachteil dar, da dadurch die Trolleys nur sehr eingeschränkt zwischen unterschiedlichen Flugzeugen getauscht werden können. Die in US 3,823,900 beschriebenen Modifikationen der Passagiersitze und die Notwendigkeit der Integration eines Ansaugsystems sind technisch aufwendig und störanfällig.

Das "Trolley Parking System" ist gegenwärtig lediglich für Half-Size Trolleys, nicht für Full-Size Trolleys geeignet.

Es ist eine Aufgabe der Erfindung, eine verbesserte Möglichkeit zum Befestigen eines Trolleys bereitzustellen.

Diese Aufgabe wird durch eine Befestigungsvorrichtung, durch ein Verfahren zum Herstellen einer Befestigungsvorrichtung und durch die Verwendung einer Befestigungsvorrichtung zum Befestigen eines Trolleys mit den Merkmalen gemäß den unabhängigen Patentansprüchen gelöst.

Die erfindungsgemäße Befestigungsvorrichtung zum Befestigen eines zu befestigenden Trolleys an einer Befestigungsstruktur enthält ein Trägerelement und einen ersten Gurtaufroller mit einem aufrollbaren Gurt und mit einem Beschlag. Der erste Gurtaufroller ist an dem Trägerelement befestigt. Der erste Gurtaufroller ist derart eingerichtet, dass er, wenn zum Koppeln eines zu befestigenden Elements mit einer Befestigungsstruktur der Beschlag mit einer Befestigungsstruktur oder mit einem zu befestigenden Element gekoppelt ist, bei Einwirken einer externen Kraft auf ein zu befestigendes Element ein Abrollen des Gurts um mehr als einen vorgebbaren Bereich verhindert.

Darüber hinaus ist erfindungsgemäß ein Verfahren zum Herstellen einer Befestigungsvorrichtung zum Befestigen eines zu befestigenden Trolleys an einer Befestigungsstruktur geschaffen, wobei bei dem Verfahren ein erster Gurtaufroller der Befestigungsvorrichtung an einem Trägerelement der Befestigungsvorrichtung befestigt wird. Ferner wird ein Beschlag des ersten Gurtaufrollers an einem aufrollbaren Gurt des ersten Gurtaufrollers angebracht. Der erste Gurtaufroller wird derart eingerichtet, dass er, wenn zum Koppeln eines zu befestigenden Elements mit einer Befestigungsstruktur der Beschlag mit einer Befestigungsstruktur oder mit einem zu befestigenden Element gekoppelt ist, bei Einwirken einer externen Kraft auf ein zu befestigendes Element ein Abrollen des Gurts um mehr als einen vorgebbaren Bereich verhindert.

Ein wichtiger Aspekt der Erfindung ist somit darin zu sehen, dass ein Gurtaufroller mit einem aufrollbaren Gurt an einem Trägerelement/einer Trägerstruktur, zum Beispiel einem starren Trägerbalken, befestigt wird, wobei der Trägerbalken derart bemessen und ausgestaltet ist, dass er auf einen zu befestigenden Trolley aufgesetzt werden kann. Der Gurt des Gurtaufrollers kann dann abgerollt werden, so dass ein Beschlag des Gurtaufrollers an einem korrespondierenden Beschlag, zum Beispiel an der Wand eines Flugzeugs, befestigt werden kann. Alternativ kann das Trägerelement mit dem Gurtaufroller an einer Befestigungsstruktur vorgesehen sein oder daran angebracht werden, zum Beispiel an der Innenwand einer Flugzeugkabine. Dann kann der Beschlag der Befestigungsvorrichtung mit einem entsprechend vorgesehenen Beschlag an dem zu befestigenden Element, zum Beispiel an einem Trolley, fixiert werden. Wirkt eine externe Kraft, zum Beispiel bei Turbulenzen während des Flugbetriebs, auf die Befestigungsvorrichtung ein, so unterbindet der Gurtaufroller das Abrollen des Gurts um mehr als einen vorgebbaren Bereich und vermeidet es daher, dass bei Einwirken einer solchen externen Kraft das zu befestigende Element sich unerwünscht bewegt bzw. von der Befestigungsstruktur entkoppelt wird. Dadurch ist die Sicherheit von Passagieren und von Flugzeugpersonal während eines Flugs signifikant erhöht und eine Verletzungsgefahr aufgrund von unzureichend gesicherten Trolleys vermieden.

Das flexible Trolley-Rückhaltesystem der Erfindung kann auch innerhalb der Längsgänge einer Flugzeugkabine (zum Beispiel während des Service) eingesetzt werden, ohne dass es erforderlich ist, mit dem Trolley größere Wege zurücklegen zu müssen. Damit ist es geeignet, Trolleys auch bei plötzlich auftretenden Turbulenzen bzw. während des Service präventiv an den dafür vorgesehenen Positionen zu sichern.

Bei dem flexiblen Trolley-Rückhaltesystem der Erfindung handelt es sich anschaulich um einen aufsetzbaren/abnehmbaren Aufsatz (oder um eine an einer Befestigungsstruktur zu installierende Vorrichtung), so dass keine feste Verbindung mit einem Trolley oder einem anderen zu befestigenden Element erforderlich ist. Für eine Anwendung ist somit keine Modifikation von konventionellen Trolleys (zum Beispiel Atlas, KSSU) notwendig. Der technische Aufwand für das Anbringen der Befestigungsmöglichkeiten in einer Flugzeugkabine ist gering. Bei einer Ausführungsform, bei der die Befestigungsvorrichtung an der Befestigungsstruktur angebracht ist, ist an dem Trolley lediglich ein Beschlag vorzusehen, der mit dem Beschlag an dem Gurt der Befestigungsvorrichtung koppelbar ist.

Das flexible Trolley-Rückhaltesystem der Erfindung ist sowohl für Half-Size als auch Full-Size Trolleys geeignet, da das Trägerelement sowohl auf einen Half-Size Trolley als auch auf einen Full-Size Trolley aufgesetzt werden kann.

Anschaulich dient das flexible Trolley-Rückhaltesystem der Erfindung zur Sicherung eines Trolleys, zum Beispiel während eines Serviervorganges, vor einer unerwünschten Beschleunigung in senkrechter Richtung, die durch Turbulenzen oder plötzliche Flugmanöver ausgelöst werden kann.

Ebenso kann es, durch die Bereitstellung zusätzlicher Befestigungspunkte in der Kabine, auch zur Sicherung von überzähligen Trolleys auf dem Passagierdeck (zum Beispiel bei Unterflur-Galleys) genutzt werden.

Gemäß einem bevorzugten Ausführungsbeispiel besteht das flexible Trolley-Rückhaltesystem aus einem flachen, an den Kanten zum Schutz vor seitlichem Verrutschen gebogenen Verbindungsstück, an dem zwei Gurtaufroller befestigt sind. Diese sind jeweils innerhalb eines vorgebbaren Bereichs abrollbar. Die Befestigung am Verbindungsstück kann am Rand des Verbindungsstücks erfolgen. Alternativ können die Gurtaufroller weiter zur Mitte des Verbindungsstücks hin oder seitlich an den abgebogenen Kanten befestigt werden.

An den Gurten können Befestigungsbeschläge angebracht sein, die eine Verbindung zu in der Flugzeugkabine eingebrachten Beschlägen ermöglichen. Die Beschläge können - aber müssen nicht - am Ende eines Gurts angebracht sein. Sie können auch an bzw. auf dem Gurt (an einer beliebigen Stelle) angebracht werden. Es ist auch das Anbringen von mehreren Beschlägen an einem Gurt möglich, zum Beispiel am Ende des Gurts und auf dem Gurt. Durch einen Federmechanismus können die Gurte automatisch bis zu einer vorgegebenen maximalen Länge in den Gurtaufroller eingezogen werden, so dass der Gurt im befestigten Zustand stets automatisch gestrafft wird. Solange keine Kraft auf den Gurt wirkt, ist er flexibel abrollbar. Sobald eine Beschleunigung des Trolleys mit senkrecht nach oben wirkenden Kraftkomponenten auftritt, wird der Gurt automatisch gegen ein weiteres Abrollen - zum Beispiel unter Verwendung einer Fliehkraftkupplung - gesperrt und verhindert auf diese Weise eine senkrechte Beschleunigung des Trolleys. Optional kann auch ein Mechanismus für ein manuelles Feststellen des Gurts vorgesehen sein. Bei den verwendeten Rollgurten kann es sich um konventionelle Gurtsysteme handeln.

Das flexible Trolley-Rückhaltesystem kann auf den Trolley aufgelegt werden. An den Auflagepunkten kann es durch dämpfendes Material mit hoher Haftreibung (zum Beispiel Gummi oder Silikon) oder durch Kraftschluss, zum Beispiel durch eine geeignete Klemmvorrichtung, vor einem Verrutschen in Längsrichtung gesichert werden. Die Gurte können an der Unterkante des Trolleys eingehakt werden. Diese oder andere Befestigungen am Trolley sind jedoch nicht zwingend erforderlich.

Die Befestigungsmöglichkeiten des flexiblen Rückhaltesystems in der Kabine können sich je nach Anwendungsfall an ganz verschiedenen Stellen befinden. Zum Beispiel können solche Befestigungsmöglichkeiten an den gangseitigen Befestigungspunkten der Passagiere für Beckengurte vorgesehen sein (hier kann ein zusätzlicher Beschlag vorgesehen sein), an den dem Gang nahegelegenen Sitzschienen zwischen den Passagiersitzen (hier sind häufig standardisierte Befestigungsbeschläge vorgesehen), an senkrechten Wänden von Kabineneinbauten (es sind in einer Höhe von ca. 20", das heißt ungefähr 508 mm, häufig Einhakbeschläge vorgesehen), oder in den Türbereichen und in der Umgebung des Trolleylifts (es sind hier häufig standardisierte Beschläge am Fußboden vorgesehen).

Mit dem flexiblen Rückhaltesystem können Trolleys an bedeutend mehr Orten in einer Flugzeugkabine vor unerwünschten senkrechten Beschleunigungen nach oben gesichert werden, als dies mit vorbekannten Lösungen möglich ist. Insbesondere die Möglichkeit des Systems, konventionelle Trolleys innerhalb der Längsgänge der Kabine zu sichern (zum Beispiel während des Service), ohne dafür Umbauten am Trolley vornehmen zu müssen, stellt einen entscheidenden Vorteil gegenüber bisherigen Lösungen dar.

Das flexible Rückhaltesystem ist für alle gängigen Trolleys (KSSU, Atlas) in beiden Standardgrößen (Half-Size Trolleys und Full-Size Trolleys) geeignet.

Das Trolley-Befestigungssystem kann von einer Person ohne besondere Kraftanstrengung betätigt werden.

Die Flexibilität des Rückhaltesystems durch die flexiblen Gurte hat den Vorteil, dass auch ein gesicherter Trolley in einem beschränkten Bereich bewegt werden kann, zum Beispiel um Passagiere vorbeizulassen. Durch die Unabhängigkeit des Systems von einem bestimmten Trolleytyp ist ein leichter Austausch des Systems zur Wartung möglich.

Bevorzugte Weiterbildungen der Erfindung ergeben sich aus den abhängigen Ansprüchen.

Im Weiteren werden Ausgestaltungen der erfindungsgemäßen Befestigungsvorrichtung beschrieben. Diese Ausgestaltungen gelten für das Verfahren zum Herstellen einer Befestigungsvorrichtung und für die Verwendung der Befestigungsvorrichtung zum Befestigen eines Trolleys.

Der erste Gurtaufroller kann derart eingerichtet sein, dass er, wenn das Trägerelement auf ein zu befestigendes Element aufgesetzt, aufgesteckt oder aufgeklemmt ist und der Beschlag an einer Befestigungsstruktur befestigt ist, an der das zu befestigende Element zu befestigen ist, bei Einwirken einer externen Kraft auf ein zu befestigendes Element ein Abrollen des Gurts um mehr als einen vorgebbaren Bereich verhindern. Gemäß dieser Ausgestaltung wird die Befestigungsvorrichtung auf den Trolley aufgesetzt und der Beschlag an dem Gurt mit einem entsprechend vorgesehenen Beschlag, zum Beispiel an einer Flugzeugkabinenwand, gekoppelt.

Alternativ kann der erste Gurtaufroller derart eingerichtet sein, dass er, wenn das Trägerelement an einer Befestigungsstruktur befestigt ist und der Beschlag auf ein zu befestigendes Element aufgesetzt ist, bei Einwirken einer externen Kraft auf ein zu befestigendes Element ein Abrollen des Gurts um mehr als einen vorgebbaren Bereich verhindert. Gemäß dieser Ausgestaltung wird die Befestigungsvorrichtung zum Beispiel an einer Flugzeugkabinenwand oder an einem Passagiersitz befestigt. Der Beschlag an dem Gurt wird dann mit einem entsprechend vorgesehenen Beschlag an einem zu befestigenden Element, zum Beispiel an einem Trolley, befestigt.

Das Trägerelement kann ein Trägerbalken sein. Es kann alternativ einen Klemmmechanismus oder einen Steckmechanismus aufweisen, mittels welchem die Befestigungsvorrichtung auf ein zu befestigendes Element aufgeklemmt bzw. aufgesteckt werden kann.

Der Beschlag kann an einem Endabschnitt des aufrollbaren Gurts angebracht sein. Alternativ kann der Beschlag auch in der Mitte oder an einer sonstigen beliebigen Stelle des Gurts vorgesehen sein.

Bei der Befestigungsvorrichtung kann eine Mehrzahl von Beschlägen vorgesehen sein, die an unterschiedlichen Stellen des aufrollbaren Gurts angebracht sind, zum Beispiel an einem Ende und an einer Stelle zwischen dem Ende und einer Rolle zum Aufrollen des Gurts.

Bei der Befestigungsvorrichtung ist ferner ein zweiter Gurtaufroller mit einem aufrollbaren Gurt und mit einem Beschlag vorgesehen. Der zweite Gurtaufroller ist an dem Trägerelement befestigt sein. Wenngleich die Erfindung mit einem einzigen Gurtaufroller auf der Trägerstruktur auskommt, kann die Stabilität und damit die Güte der Befestigung deutlich verbessert werden, wenn ein zweiter Gurtaufroller vorgesehen wird, da dann ein Trolley mittels zweier Befestigungspunkte an der Umgebung befestigt ist. Dadurch wird die Stabilität maßgeblich erhöht.

Die Befestigungsvorrichtung kann alternativ ein zusätzliches Trägerelement aufweisen, wobei der zweite Gurtaufroller an dem zusätzlichen Trägerelement befestigt sein kann. Mit anderen Worten können unterschiedliche Gurtaufroller der Befestigungsvorrichtung an unterschiedlichen Trägerelementen angebracht sein. Mehrere solcher Trägerelemente können zum Beispiel mittels eines Seils miteinander gekoppelt sein.

Der erste Gurtaufroller ist an einem ersten Endabschnitt des Trägerelements befestigt , und der zweite Gurtaufroller ist an einem zweiten Endabschnitt des Trägerelements befestigt. Diese geometrische Konfiguration führt zu einer besonders vorteilhaften Kräfteverteilung beim Befestigen des zu befestigenden Elements und erhöht dadurch weiter die Stabilität der Befestigungsvorrichtung.

Alternativ kann der erste Gurtaufroller in einem ersten Abstand von einem ersten Endabschnitt des Trägerelements befestigt sein, und der zweite Gurtaufroller kann in einem zweiten Abstand von einem zweiten Endabschnitt des Trägerelements befestigt sein. Der erste Abstand und der zweite Abstand sind vorzugsweise von Null verschieden, so dass die Gurtaufroller gemäß dieser Ausgestaltung, verglichen mit der zuvor beschriebenen Ausgestaltung, näher beieinander angeordnet sind.

Das Trägerelement kann ein starrer abgeflachter langgestreckter Körper sein, der zum Beispiel im Wesentlichen eindimensional (eine Art Verbindungsstange) oder im Wesentlichen zweidimensional (das heißt als flächige Verbindungsstruktur) geformt ist. Die Trägerstruktur soll so vorgesehen sein, dass sie auf das zu befestigende Element, insbesondere auf einen Trolley, zum Erzielen einer sicheren Verbindung aufgesetzt werden kann.

Das Trägerelement der Befestigungsvorrichtung kann an einem ersten Endabschnitt einen gebogenen Abschnitt aufweisen, und das Trägerelement kann an einem zweiten Endabschnitt einen gebogenen Abschnitt aufweisen. Mittels Vorsehens der Endabschnitte der Trägerstruktur in gebogener Weise kann eine besonders gute Anpassung an die Geometrie eines zu befestigenden Elements (zum Beispiel eines Trolleys) erzielt werden, und mit den seitlich gebogenen Abschnitte ist ein seitliches Abrutschen der Trägerstruktur von dem zu befestigenden Element sicher vermieden.

Der erste Gurtaufroller kann an dem gebogenen Abschnitt des ersten Endabschnitts des Trägerelements befestigt sein, und der zweite Gurtaufroller kann an einem gebogenen Abschnitt des zweiten Endabschnitts des Trägerelements befestigt sein. Bei einer solchen Geometrie sind die auf die Befestigungsvorrichtung einwirkenden Kraftverhältnisse günstig.

Es ist auch möglich, für jeden verwendeten Gurtabroller ein eigenes Trägerelement (zum Beispiel einen eigenen Trägerbalken) oder ein ähnliches Befestigungsteil zu verwenden. Es können auch Trägerelemente eingesetzt werden, die an einer Kante des Trolleys aufgesetzt und/oder festgeklemmt werden.

Ferner kann die Befestigungsvorrichtung mindestens einen zusätzlichen Gurtaufroller mit einem aufrollbaren Gurt und mit einem Beschlag aufweisen, wobei der mindestens eine zusätzliche Gurtaufroller an dem Trägerelement befestigt sein kann. Zum Beispiel können insgesamt drei Gurtaufroller oder vier Gurtaufroller, oder noch eine höhere Anzahl von Gurtaufrollern vorgesehen sein, die nach verschiedenen Seiten hin an Befestigungspunkten befestigbar sind. Die erreichbare Stabilität ist dabei umso besser, je mehr Gurtaufroller vorgesehen sind. Bei Vorsehen einer eher geringen Anzahl von Gurtaufrollern ist jedoch ein schnelles Installieren und Deinstallieren der Befestigungsvorrichtung und ein kostengünstiges Herstellen der Befestigungsvorrichtung möglich.

Der erste Gurtaufroller kann einen Federmechanismus aufweisen, der derart eingerichtet ist, dass er zum Straffen des Gurts den Gurt bis zu einer vorgebbaren Länge einzieht. Wenn der Beschlag des Gurtaufrollers an einem korrespondierenden Beschlag einer Befestigungsstruktur befestigt ist, bewirkt der Federmechanismus, dass der Gurt bis zu einer vorgebbaren Länge eingezogen wird, wodurch der Gurt automatisch gestrafft wird. Dadurch wird eine sichere Befestigung des zu befestigenden Elements mittels der Befestigungsvorrichtung an der Befestigungsstruktur erreicht.

Der erste Gurtaufroller kann derart eingerichtet sein, dass er, wenn der Beschlag mit einer Befestigungsstruktur oder mit einem zu befestigenden Element gekoppelt ist" bei Einwirken einer externen Kraft mit einer Kraftkomponente senkrecht zu dem Trägerelement auf ein zu befestigendes Element ein Abrollen des Gurts um mehr als einen vorgebbaren Bereich verhindert. Somit kann die Befestigungsvorrichtung insbesondere in einem Flugzeug vorteilhaft eingesetzt werden, da dort im Falle von Turbulenzen häufig senkrechte Kraftkomponenten auftreten, die bei Verwendung der erfindungsgemäßen Befestigungsvorrichtung effektiv daran gehindert werden, ein zu befestigendes Element (zum Beispiel einen Trolley oder einen Servierwagen) unerwünscht vom Flugzeugboden abheben zu lassen.

Der erste Gurtaufroller kann eine Fliehkraftkupplung aufweisen, die derart eingerichtet ist, dass sie, wenn der Beschlag mit einer Befestigungsstruktur oder mit einem zu befestigenden Element gekoppelt ist, bei Einwirken einer externen Kraft auf ein zu befestigendes Element ein Abrollen des Gurts um mehr als einen vorgebbaren Bereich verhindert. Als eine Fliehkraftkupplung kann zum Beispiel eine Kupplung angesehen werden, bei der Kraftschluss hergestellt wird, indem sich zum Beispiel Gewichte bei steigender Krafteinwirkung verschieben, wodurch der erfindungsgemäße Effekt erreicht wird. Mit einer solchen Fliehkraftkupplung kann erfindungsgemäß erreicht werden, dass, sobald eine Beschleunigung des Trolleys mit senkrecht nach oben wirkender Komponente auftritt, der Gurt automatisch gegen ein weiteres Abrollen durch die Fliehkraftkupplung gesperrt wird, so dass auf diese Weise eine senkrechte Beschleunigung des Trolleys vermieden ist.

Die Befestigungsvorrichtung kann einen Mechanismus zum manuellen Feststellen des Gurts aufweisen. Dadurch kann ein Benutzer den Gurt flexibel, zum Beispiel in einer Gefahrensituation, schnell und ohne Verwendung einer automatischen Einrichtung steuern.

Das Trägerelement kann in einem Oberflächenbereich, der zum Aufsetzen auf ein zu befestigendes Element vorgesehen ist, ein dämpfendes Material aufweisen, zum Beispiel Schaumstoff. Mit einem solchen dämpfenden Material kann eine Beschädigung des Trolleys und der Befestigungsvorrichtung vermieden werden.

Das Trägerelement der Befestigungsvorrichtung kann in einem Oberflächenbereich, der zum Aufsetzen auf ein Befestigungselement vorgesehen ist, ein rutschfestes Material aufweisen, insbesondere ein Material mit einer hohen Haftreibung. Eine Gummibeschichtung zum Beispiel vermeidet ein Verrutschen des zu befestigenden Elements gegenüber der Befestigungsvorrichtung und erhöht somit die Stabilität der Befestigung.

Das Trägerelement bzw. der Trägerbalken kann auch mit einen Klemmmechanismus versehen werden, um es bzw. ihn kraftschlüssig gegen ein Verrutschen zu sichern. Hierzu ist zum Beispiel ein aus zwei Teilen bestehender Trägerbalken denkbar, der auf dem Trolley zum Beispiel mit Seilen, Drähten, Stangen oder Federn verspannt wird.

Im Weiteren werden Ausgestaltungen der erfindungsgemäßen Verwendung beschrieben. Diese Ausgestaltungen gelten auch für die Befestigungsvorrichtung und für das Verfahren zum Herstellen einer Befestigungsvorrichtung.

Im Rahmen der erfindungsgemäßen Verwendung kann der Trolley an einer Befestigungsstruktur in einem Flugzeug befestigt werden. Ein Flugzeug ist eine besonders kritische Umgebung hinsichtlich plötzlich auftretender Kraftkomponenten (zum Beispiel im Fall einer Turbulenz), so dass die Befestigungsvorrichtung der Erfindung in einem Flugzeug ihre Vorteile besonders effektiv entfaltet.

Die Befestigungsstruktur kann zum Beispiel ausgewählt sein aus der Gruppe bestehend aus einem Beschlag an einem Passagiersitz, einem Beschlag an einer Wand und einem Beschlag an dem Boden des Flugzeugs. Im Prinzip kann die Befestigungsvorrichtung der Erfindung an jeder beliebigen Befestigungsstruktur im Inneren eines Flugzeugs befestigt werden, an der ein entsprechender Beschlag vorgesehen ist, der korrespondierend zu dem Beschlag der Befestigungsvorrichtung eingerichtet ist.

Ausführungsbeispiele der Erfindung sind in den Figuren dargestellt und werden im Weiteren näher erläutert.

Es zeigen:
Fig. 1 eine Befestigungsvorrichtung gemäß einem ersten Ausführungsbeispiel der Erfindung;
Fig. 2 eine Befestigungsvorrichtung gemäß einem zweiten Ausführungsbeispiel der Erfindung;
Fig. 3 bis Fig. 5 unterschiedliche Ansichten einer Befestigungsvorrichtung der Erfindung;
Fig. 6 eine erste Ansicht einer Befestigungsvorrichtung gemäß dem zweiten Ausführungsbeispiel der Erfindung;
Fig. 7 eine zweite Ansicht der Befestigungsvorrichtung gemäß dem zweiten Ausführungsbeispiel der Erfindung
Fig. 8 eine Befestigungsvorrichtung gemäß einem dritten Ausführungsbeispiel der Erfindung;
Fig. 9 eine Befestigungsvorrichtung gemäß einem vierten Ausführungsbeispiel der Erfindung.

Die Darstellungen in den Figuren sind schematisch und nicht maßstäblich.

Gleiche oder ähnliche Komponenten in unterschiedlichen Figuren sind mit gleichen Bezugsziffern versehen.

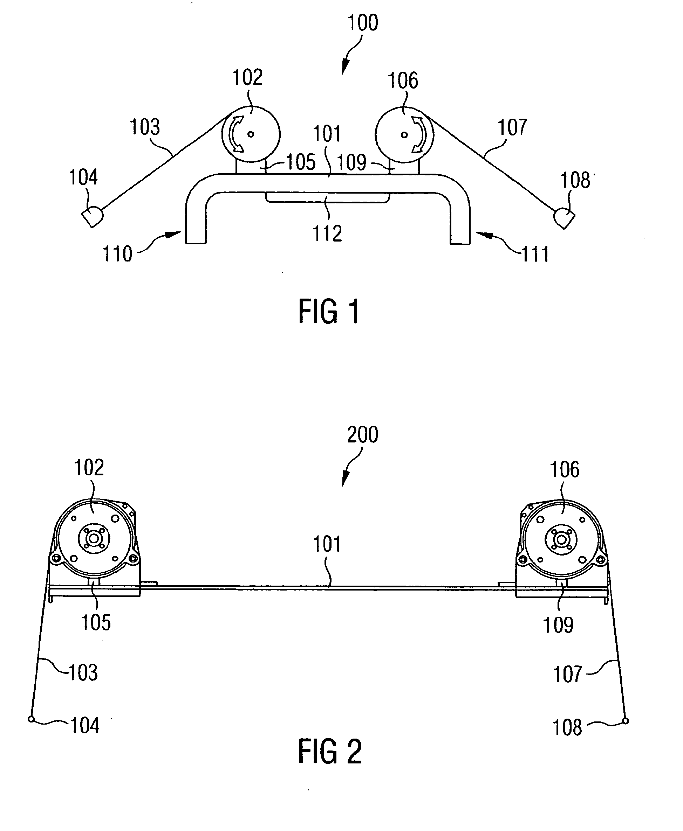

Im Weiteren wird bezugnehmend auf **Fig. 1** eine Befestigungsvorrichtung 100 gemäß einem ersten Ausführungsbeispiel der Erfindung beschrieben.

Die Befestigungsvorrichtung 100 ist zum Befestigen eines Trolleys an einer Wand eines Flugzeugs eingerichtet. Die Befestigungsvorrichtung 100 enthält einen Trägerbalken 101, einen ersten Gurtaufroller 102 und einen zweiten Gurtaufroller 106. Der erste Gurtaufroller 102 enthält einen aufrollbaren Gurt 103 und einen Beschlag 104. Der zweite Gurtaufroller 106 enthält einen aufrollbaren Gurt 107 und einen Beschlag 108. Der erste Gurtaufroller 102 ist mittels eines ersten Verbindungsstücks 105 mit dem Stahl-Trägerbalken 101 gekoppelt. Der zweite Gurtaufroller 106 ist mittels eines zweiten Verbindungsstücks 109 mit dem Trägerbalken 101 gekoppelt. Der Beschlag 104 ist an einem Endabschnitt des aufrollbaren Gurts 103 angebracht, und der Beschlag 108 ist an einem Endabschnitt des aufrollbaren Gurts 107 angebracht.

Jeder der beiden Gurtaufroller 102, 106 ist derart eingerichtet, dass er, wenn der Trägerbalken 101 auf einen zu befestigenden Trolley (nicht gezeigt) aufgesetzt ist und die Beschläge 104 bzw. 108 an einer Wand in einem Flugzeug befestigt sind, an welcher der Trolley befestigt werden soll, bei Einwirken einer (gemäß Fig. 1) vertikalen Kraft auf einen Trolley ein Abrollen der Gurte 103, 107 um mehr als einen vorgebbaren Bereich verhindert. Der erste Gurtaufroller 102 ist an einem ersten Endabschnitt des Trägerbalkens 101 befestigt, der zweite Gurtaufroller 106 ist an einem zweiten Endabschnitt des Trägerbalkens 101 befestigt.

Der Trägerbalken 101 ist als ein starrer, abgeflachter langgestreckter Körper vorgesehen und weist an einem ersten Endabschnitt einen gebogenen Abschnitt 110 auf, sowie einen zweiten gebogenen Abschnitt 111 an einem zweiten Endabschnitt des Trägerbalkens 101. Die gebogenen Abschnitte 110, 111 sind derart geformt und dimensioniert, dass ein Trolley in den U-förmigen Hohlraum im unteren Bereich der Befestigungsvorrichtung 100 eingeführt werden kann. Anders ausgedrückt kann die Befestigungsvorrichtung 100 auf einen Trolley so aufgesetzt werden, dass diese nicht nur entlang der Haupterstreckungsrichtung des Trägerbalkens 101 den Trolley berührt, sondern dass sie auch an linken und rechten Endabschnitten (das heißt an den gebogenen Abschnitten 110, 111) zum Vermeiden eines Abrutschens an den Trolley anstößt.

Die Gurtaufroller 102, 106 weisen jeweils einen Federmechanismus auf, der derart eingerichtet ist, dass er zum Straffen des Gurts 103 bzw. 107 den jeweiligen Gurt 103, 107 bis zu einer vorgebbaren Länge einzieht. Eine Fliehkraftkupplung in jedem der Gurtaufroller 102, 106 sorgt dafür, dass bei Einwirken einer externen Kraft auf einen Trolley ein Abrollen der Gurte 103, 107 um mehr als einen vorgebbaren Bereich verhindert ist.

Der Trägerbalken 101 weist in einem Oberflächenbereich, der zum Aufsetzen auf den Trolley vorgesehen ist, eine poröse Gummibeschichtung 112 als ein rutschfestes und dämpfendes Material auf.

Die Befestigungsvorrichtung 100 wird auf die Oberseite eines in Fig. 1 nicht gezeigten Trolleys aufgesetzt. Nachfolgend werden die Gurte 103, 107 ausgezogen, und die Beschläge 104, 108 werden an korrespondierenden Beschlägen an Passagiersitzen und einem Passagierraum eines Flugzeugs befestigt. Der Federmechanismus im Inneren der Gurtaufroller 102, 106 sorgt dann dafür, dass die Gurte gestrafft werden und somit die Befestigungsvorrichtung 100 fest auf dem zu befestigenden Trolley aufsitzt. Wirkt nun eine senkrechte Kraft (zum Beispiel aufgrund von Turbulenzen während des Flugbetriebs) auf den Trolley ein, so ist dieser aufgrund der Fliehkraftkupplung und der Funktionsweise der Gurtaufroller 102, 106 vor einem unerwünschten Bewegen geschützt.

Im Weiteren wird bezugnehmend auf **Fig. 2** eine Befestigungsvorrichtung 200 gemäß einem zweiten Ausführungsbeispiel der Erfindung beschrieben.

In Fig. 2 sind Details der Gurtaufroller 102, 106 gezeigt. Der detaillierte Aufbau eines Gurtaufrollers als solcher ist bekannt.

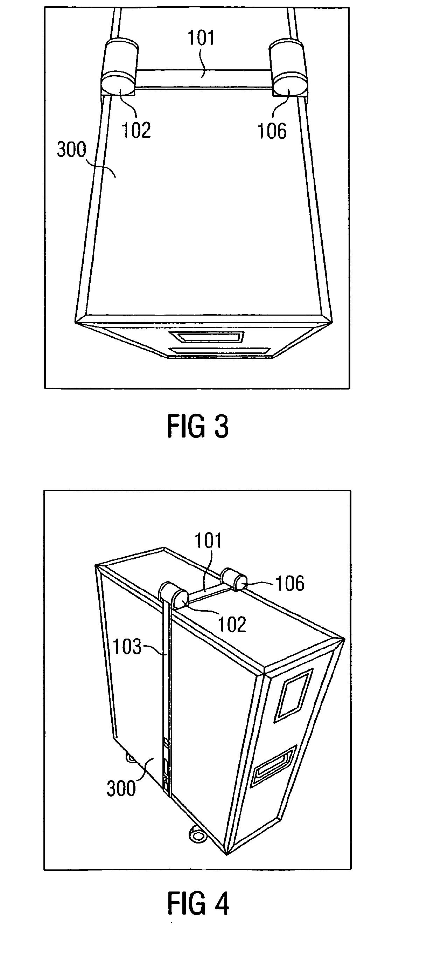

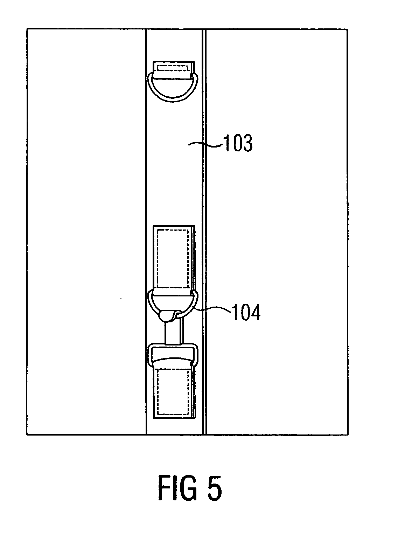

In **Fig. 3** bis **Fig. 5** sind perspektivische Ansichten gezeigt, die eine erfindungsgemäße Befestigungsvorrichtung mit einem Trolley 300 darstellen, der im Inneren eines Flugzeugs mittels der Befestigungsvorrichtung befestigt ist.

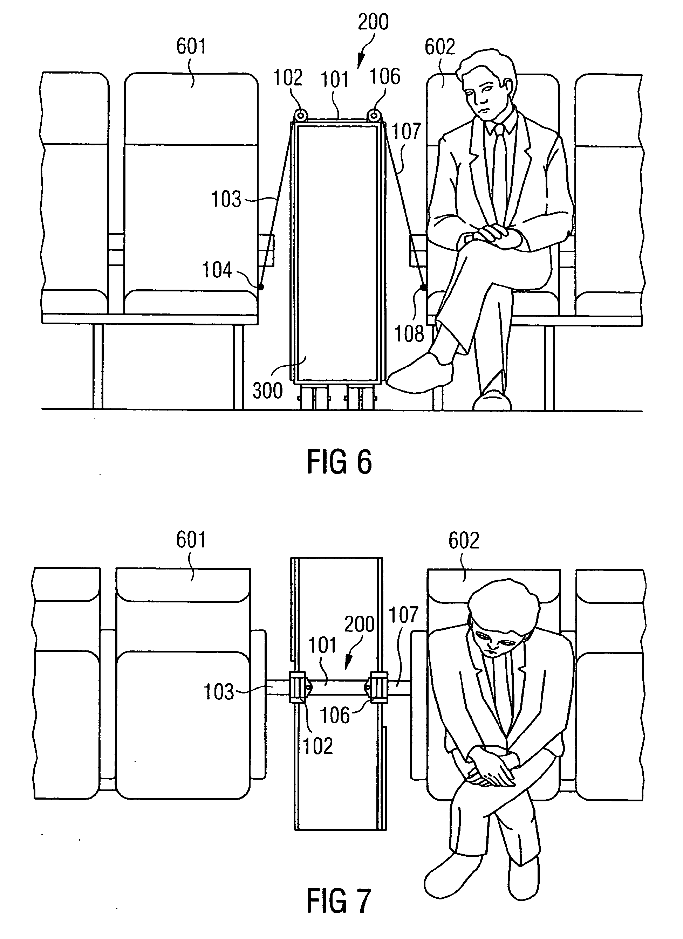

In **Fig. 6** ist eine erste Ansicht der Befestigungsvorrichtung 200 gemäß dem zweiten Ausführungsbeispiel der Erfindung beschrieben. **Fig. 7** zeigt eine andere Ansicht dieses Systems.

Bei der Befestigungsvorrichtung 200 sind die Beschläge 104, 108 an korrespondierenden Beschlägen an einem ersten Passagiersitz 601 bzw. an einem zweiten Passagiersitz 602 befestigt. Genauer gesagt sind die Beschläge 104, 108 an gangseitigen Befestigungspunkten der Passagiersitze 601, 602 angebracht (hier sind zusätzliche Beschläge, nicht gezeigt, vorgesehen).

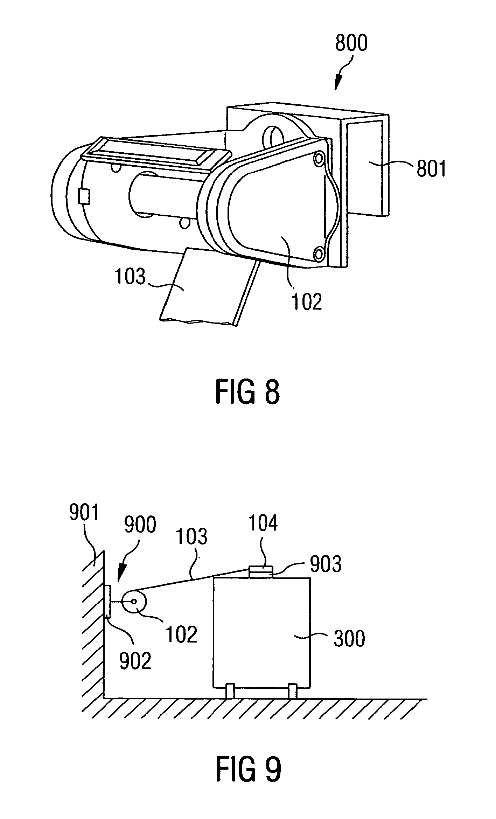

Im Weiteren wird bezugnehmend auf **Fig. 8** eine Befestigungsvorrichtung 800 gemäß einem dritten Ausführungsbeispiel der Erfindung beschrieben.

Die Befestigungsvorrichtung 800 enthält nur einen einzigen Gurtaufroller 102 mit einem Gurt 103 und mit einem in Fig.8 nicht gezeigten Beschlag zur Befestigung an einem entsprechenden Gegenbeschlag an einem Passagiersitz eines Flugzeugs. Ein Trägerelement 801 ist mit einem im Wesentlichen U-förmigen Profil vorgesehen, so dass es auf einen zu befestigenden Trolley aufsteckbar ist.

Im Weiteren wird bezugnehmend auf **Fig. 9** eine Befestigungsvorrichtung 900 gemäß einem vierten Ausführungsbeispiel der Erfindung beschrieben.

Die Befestigungsvorrichtung 900 zum Befestigen eines Trolleys 300 an einer Flugzeugkabine-Innenwand 901 ist an der Flugzeugkabine-Innenwand 901 befestigt (zum Beispiel festgeschraubt) und enthält ein Trägerelement 902 und einen Gurtaufroller 102 mit einem aufrollbaren Gurt 103 und mit einem Beschlag 104. Der Gurtaufroller 102 ist an dem Trägerelement 902 befestigt. Der Gurtaufroller 102 ist derart eingerichtet, dass er, wenn zum Koppeln des Trolleys 300 mit der Flugzeugkabine-Innenwand 901 der Beschlag 104 mit einem Beschlag 903 des Trolleys 300 gekoppelt ist, bei Einwirken einer externen Kraft auf den Trolley 300 ein Abrollen des Gurts 103 um mehr als einen vorgebbaren Bereich verhindert.

Somit ist gemäß Fig. 9 der Trolley 300 lediglich mit einem Beschlag 903 versehen. Die Befestigungsvorrichtung 900 ist an der Flugzeugkabine-Innenwand 901 als Befestigungsstruktur angebracht. Zum Befestigen des Trolleys 300 werden die Beschläge 104 und 903 aneinander befestigt.

Die Erfindung beschränkt sich in ihrer Ausführung nicht auf die in den Figuren dargestellten bevorzugten Ausführungsformen. Vielmehr ist eine Vielzahl von Varianten denkbar, welche von der dargestellten Lösung und dem erfindungsgemäßen Prinzip auch bei grundsätzlich anders gearteten Ausführungsformen Gebrauch macht.

Ergänzend sei darauf hingewiesen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

### Bezugszeichenliste:

- 100: Befestigungsvorrichtung
- 101: Trägerbalken
- 102: erster Gurtaufroller
- 103: aufrollbarer Gurt
- 104: Beschlag
- 105: Verbindungsstück
- 106: zweiter Gurtaufroller
- 107: aufrollbarer Gurt
- 108: Beschlag
- 109: Verbindungsstück
- 110: erster gebogener Abschnitt
- 111: zweiter gebogener Abschnitt
- 112: Gummibeschichtung
- 200: Befestigungsvorrichtung
- 300: Trolley
- 601: erster Passagiersitz
- 602: zweiter Passagiersitz
- 800: Befestigungsvorrichtung
- 801: aufsteckbares Trägerelement
- 900: Befestigungsvorrichtung
- 901: Flugzeugkabine-Innenwand
- 902: Trägerelement
- 903: Beschlag

## Patentansprüche

1. Befestigungsvorrichtung (100) zum Befestigen eines Trolleys an einer Befestigungsstruktur (601, 602), wobei
die Befestigungsvorrichtung (100) aufweist
ein Trägerelement (101);
einen ersten Gurtaufroller (102) mit einem aufrollbaren Gurt (103) und mit einem Beschlag (104);
einen zweiten Gurtaufroller (106) mit einem aufrollbaren Gurt (107) und mit einem Beschlag (108)
wobei der erste Gurtaufroller (102) und zweite Gurtaufroller (106) an dem Trägerelement (101) befestigt ist;
wobei der erste Gurtaufroller (102) derart eingerichtet ist, dass er, wenn das Trägerelement (101) auf den zu befestigenden Trolley (300) kraftschlüssig aufgesetzt,
aufgesteckt oder aufgeklemmt ist und der Beschlag (104) an einer Befestigungsstruktur (601, 602) befestigt ist, an der der zu befestigende Trolley (300) zu befestigen ist, bei Einwirken einer externen Kraft mit einer senkrecht nach oben wirkenden Kraftkomponente auf den zu befestigenden Trolley (300) ein Abrollen des Gurts (103) um mehr als einen vorgebbaren Bereich verhindert,
**dadurch gekennzeichnet, dass**
der erste Gurtaufroller (102) an einem ersten Endabschnitt und der zweiten Gurtaufroller (106) an einem zweiten Endabschnitt eines Trägerelements befestigt sind; oder dass der erste Gurtaufroller (102) in einem ersten Abstand von einem ersten Endabschnitt in der Nähe des ersten Endabschnitts und der zweite Gurtaufroller (106) in einem zweiten Abstand von einem zweiten Endabschnitt in der Nähe des zweiten Endabschnitts eines Trägerelements befestigt sind.

2. Befestigungsvorrichtung (100) nach Anspruch 1,
bei der das Trägerelement (101) ein Trägerbalken ist.

3. Befestigungsvorrichtung (100) nach einem der Ansprüche 1 oder 2,
bei welcher der Beschlag (104) an einem Endabschnitt des aufrollbaren Gurts (103) angebracht ist.

4. Befestigungsvorrichtung (100) nach einem der Ansprüche 1 bis 3,
mit einer Mehrzahl von Beschlägen, die an unterschiedlichen Stellen des aufrollbaren Gurts (103) angebracht sind.

5. Befestigungsvorrichtung (100) nach einem der Ansprüche 1 bis 4,
mit einem zusätzlichen Trägerelement, wobei der zweite Gurtaufroller (106) an dem zusätzlichen Trägerelement (101) befestigt ist.

6. Befestigungsvorrichtung (100) nach einem der Ansprüche 1 bis 5,
bei welcher das Trägerelement (101) ein starrer abgeflachter langgestreckter Körper ist.

7. Befestigungsvorrichtung (100) nach einem der Ansprüche 1 bis 6,
bei welcher das Trägerelement (101) an einem ersten Endabschnitt einen gebogenen Abschnitt (110) aufweist und bei welcher das Trägerelement (101) an einem zweiten Endabschnitt einen gebogenen Abschnitt (111) aufweist.

8. Befestigungsvorrichtung (100) nach Anspruch 7,
bei welcher der erste Gurtaufroller (102) an dem gebogenen Abschnitt (110) des ersten Endabschnitts des Trägerelements (101) befestigt ist und bei welcher der zweite Gurtaufroller (106) an dem gebogenen Abschnitt (111) des zweiten Endabschnitts des Trägerelements (101) befestigt ist.

9. Befestigungsvorrichtung (100) nach einem der Ansprüche 1 bis 8,
die ferner mindestens einen zusätzlichen Gurtaufroller mit einem aufrollbaren Gurt (103) und mit einem Beschlag (104) aufweist, wobei der mindestens eine zusätzliche Gurtaufroller an dem Trägerelement (101) befestigt ist.

10. Befestigungsvorrichtung (100) nach einem der Ansprüche 1 bis 9,
bei welcher der erste Gurtaufroller (102) einen Federmechanismus aufweist, der derart eingerichtet ist, dass er zum Straffen des Gurts (103) den Gurt (103) bis zu einer vorgebbaren Länge einzieht.

11. Befestigungsvorrichtung (100) nach einem der Ansprüche 1 bis 10,
wobei der erste Gurtaufroller (102) derart eingerichtet ist, dass er, wenn der Beschlag (104) mit einer Befestigungsstruktur (601, 602) oder mit einem zu befestigenden Trolley (300) gekoppelt ist, bei Einwirken einer externen Kraft mit einer Kraftkomponente senkrecht zu dem Trägerelement (101) auf einen zu befestigenden Trolley (300) ein Abrollen des Gurts (103) um mehr als einen vorgebbaren Bereich verhindert.

12. Befestigungsvorrichtung (100) nach einem der Ansprüche 1 bis 11,
bei welcher der erste Gurtaufroller (102) eine Fliehkraftkupplung aufweist, die derart eingereichtet ist, dass sie, wenn der Beschlag (104) mit einer Befestigungsstruktur (601, 602) oder mit einem zu befestigenden Trolley (300) gekoppelt ist, bei Einwirken einer externen Kraft auf einen zu befestigenden Trolley (300) ein Abrollen des Gurts (103) um mehr als einen vorgebbaren Bereich verhindert.

13. Befestigungsvorrichtung (100) nach einem der Ansprüche 1 bis 12,
mit einem Mechanismus zum manuellen Feststellen des Gurts (103).

14. Befestigungsvorrichtung (100) nach einem der Ansprüche 1 bis 13, bei welcher das Trägerelement (101) in einem Oberflächenbereich, der zum Aufsetzen auf einen zu befestigenden Trolley (300) vorgesehen ist, ein dämpfendes Material (112) aufweist.

15. Befestigungsvorrichtung (100) nach einem der Ansprüche 1 bis 14, bei welcher das Trägerelement (101) in einem Oberflächenbereich, der zum Aufsetzen auf einen zu befestigenden Trolley (300) vorgesehen ist, ein rutschfestes Material (112) aufweist.

16. Verfahren zum Herstellen einer Befestigungsvorrichtung (100) zum Befestigen eines Trolleys an einer Befestigungsstruktur (601, 602), wobei bei dem Verfahren
ein erster Gurtaufroller (102) der Befestigungsvorrichtung derart eingerichtet wird, dass er, wenn das
Trägerelement (101) auf den zu befestigenden Trolley (300) kraftschlüssig aufgesetzt, aufgesteckt oder aufgeklemmt ist und ein Beschlag (104) eines ersten Gurtaufrollers(102) an einer Befestigungsstruktur (601, 602) befestigt ist, an der der zu befestigende Trolleys (300) zu befestigen ist, bei Einwirken einer externen Kraft mit einer senkrecht nach oben wirkenden Kraftkomponente auf den zu befestigenden Trolleys (300) ein Abrollen eines Gurts (103) eines ersten Gurtaufrollers (102) um mehr als einen vorgebbaren Bereich verhindert
ein Beschlag (104) des ersten Gurtaufrollers (102) an einem aufrollbaren Gurt (103) des ersten Gurtaufrollers (102) angebracht wird;
ein Beschlag (108) eines zweiten Gurtaufrollers (106) an einem aufrollbaren Gurt (107) des zweiten Gurtaufrollers (106) angebracht wird;
**dadurch gekennzeichnet, dass**
der erste Gurtaufroller (102) der Befestigungsvorrichtung (100) an einem ersten
Endabschnitt oder in einem ersten Abstand von einem ersten Endabschnitt in der Nähe des ersten Endabschnitts eines
Trägerelements (101) der Befestigungsvorrichtung (100) befestigt wird;
der zweite Gurtaufroller (106) der Befestigungsvorrichtung (100) an einem zweiten Endabschnitt oder in einem zweiten Abstand von einem zweiten Endabschnitt in der Nähe des zweiten Endabschnitts eines Trägerelements der Befestigungsvorrichtung (100) befestigt wird.

17. Verwendung einer Befestigungsvorrichtung (100) nach einem der Ansprüche 1 bis 15 zum Befestigen eines Trolleys (300).

18. Verwendung einer Befestigungsvorrichtung nach Anspruch 17, bei welcher der Trolley (300) an einer Befestigungsstruktur (601, 602) in einem Flugzeug befestigt wird.

19. Verwendung einer Befestigungsvorrichtung nach Anspruch 18, bei der die Befestigungsstruktur (601, 602) ausgewählt ist aus der Gruppe bestehend aus
einem Beschlag an einem Passagiersitz;
einem Beschlag an einer Wand; und
einem Beschlag an einem Boden
eines Flugzeugs.

## Claims

1. Fastening device (100) for fastening a trolley to a fastening structure (601, 602), wherein
the fastening device (100) comprises
a support element (101);
a first belt retractor (102) with a retractable belt (103) and a fitting (104);
a second belt retractor (106) with a retractable belt (107) and a fitting (108);
wherein the first belt retractor (102) and the second belt retractor (106) are fastened to the support element (101);
wherein the first belt retractor (102) is adapted in such a way that, when the support element (101) is positively placed, plugged, or clamped on the trolley (300) to be fastened and the fitting (104) is fastened to a fastening structure (601, 602), to which the trolley (300) to be fastened is to be fastened, it prevents unrolling of the belt (103) by more than a predefinable range if an external force with a force component acting vertically upward acts on the trolley (300) to be fastened;
**characterized in that**
the first belt retractor (102) is fastened to a first end section and the second belt retractor (106) is fastened to a second end section of a support element; or **in that**
the first belt retractor (102) is fastened at a first distance from a first end section near the first end section and the second belt retractor (106) is fastened at a second distance from a second end section near the second end section of a support element.

2. The fastening device (100) according to claim 1,
wherein the support element (101) is a support bar.

3. Fastening device (100) according to one of claims 1 or 2,
wherein the fitting (104) is attached to an end section of the retractable belt (103).

4. Fastening device (100) according to one of claims 1 to 3, with
a plurality of fittings which are attached at different positions of the retractable belt (103).

5. Fastening device (100) according to one of claims 1 to 4, with
an additional support element,
wherein the second belt retractor (106) is fastened to the additional support element (101).

6. Fastening device (100) according to one of claims 1 to 5,
wherein the support element (101) is a rigid, flattened oblong body.

7. Fastening device (100) according to one of claims 1 to 6,
wherein the support element (101) has a curved section (110) on a first end section, and
wherein the support element (101) has a curved section (111) on a second end section.

8. Fastening device (100) according to claim 7,
wherein the first belt retractor (102) is fastened to the curved section (110) of the first end section of the support element (101), and
wherein the second belt retractor (106) is fastened to the curved section (111) of the second end section of the support element (101).

9. Fastening device (100) according to one of claims 1 to 8,
which further comprises
at least one additional belt retractor with a retractable belt (103) and a fitting (104),
wherein the at least one additional belt retractor is fastened to the support element (101).

10. Fastening device (100) according to one of claims 1 to 9,
wherein the first belt retractor (102) comprises a spring mechanism, which is adapted in such a way that it pulls in the belt (103) up to a predefinable length to tension the belt (103).

11. Fastening device (100) according to one of claims 1 to 10,
wherein the first belt retractor (102) is adapted in such a way that, when the fitting (104) is coupled to a fastening structure (601, 602) or to a trolley (300) to be fastened, it prevents unrolling of the belt (103) by more than a predefinable range if an external force having a force component perpendicular to the support element (101) acts on a trolley (300) to be fastened.

12. Fastening device (100) according to one of claims 1 to 11,
wherein the first belt retractor (102) comprises a centrifugal clutch, which is adapted in such a way that, when the fitting (104) is coupled to a fastening structure (601, 602) or to a trolley (300) to be fastened, it prevents unrolling of the belt (103) by more than a predefinable range if an external force acts on a trolley (300) to be fastened.

13. Fastening device (100) according to one of claims 1 to 12, with
a mechanism for manually fixing the belt (103).

14. Fastening device (100) according to one of claims 1 to 13,
wherein the support element (101) comprises a damping material (112) in a surface area which surface area is provided to be placed on a trolley (300) to be fastened.

15. Fastening device (100) according to one of claims 1 to 14,
wherein the support element (101) comprises an anti-slip material (112) in a surface area which surface area is provided to be placed on a trolley (300) to be fastened.

16. A method for manufacturing a fastening device (100) for fastening a trolley to a fastening structure (601, 602), wherein in the method:
a first belt retractor (102) of the fastening device (100) is adapted in such a way that when the support element (101) is positively placed, plugged, or clamped on the trolley (300) and the fitting (104) of a first belt retractor (102) is fastened to a fastening structure (601, 602), to which the trolley (300) to be fastened is to be fastened, it prevents unrolling of the belt (103) of a first belt retractor (102) by more than a predefinable range if an external force with a force component acting vertically upward acts on the trolley (300) to be fastened;
a fitting (104) of the first belt retractor (102) is attached to a retractable belt (103) of the first belt retractor (102);
a fitting (108) of the second belt retractor (106) is attached to a retractable belt (107) of the second belt retractor (106);
**characterized in that**
the first belt retractor (102) of the fastening device (100) is fastened to a first end section or at a first distance from a first end section near the first end section of a support element (101) of the fastening device (100);
the second belt retractor (106) of the fastening device (100) is fastened to a second end section or at a second distance from a second end section near the second end section of a support element of the fastening device (100).

17. Use of a fastening device (100) according to one of claims 1 to 15 for fastening a trolley (300).

18. Use of a fastening device according to claim 17,
wherein the trolley (300) is fastened to a fastening structure (601, 602) in an aircraft.

19. Use of a fastening device according to claim 18,
wherein the fastening structure (601, 602) is selected from the group consisting of
a fitting on a passenger seat;
a fitting on a wall; and
a fitting on a floor
of an aircraft.

## Revendications

1. Dispositif de fixation (100) pour fixer un chariot sur une structure de fixation (601, 602), le dispositif de fixation (100) comportant
un élément de support (101),
un premier enrouleur de sangle (102) muni d'une sangle enroulable (103) et d'une ferrure (104),
un second enrouleur de sangle (106) muni d'une sangle enroulable (107) et d'une ferrure (108),
dans lequel le premier enrouleur de sangle (102) et le second enrouleur de sangle (106) sont fixés sur l'élément de support (101),
dans lequel le premier enrouleur de sangle (102) est agencé de telle sorte que lorsque l'élément de support (101) est monté en force sur le chariot à fixer (300), et que la ferrure (104) est fixée sur une structure de fixation (601, 602) sur laquelle ledit chariot à fixer (300) doit être fixé, il empêche un déroulement de la sangle (103) autour d'une zone angulaire supérieure à une zone prédéterminée lorsqu'une force extérieure ayant une composante de force agissant perpendiculairement vers le haut est appliquée sur ledit chariot à fixer (300),
**caractérisé en ce que** le premier enrouleur de sangle (102) et le second enrouleur de sangle (106) sont respectivement fixés sur une première partie d'extrémité et sur une seconde partie d'extrémité d'un élément de support, ou **en ce que** le premier enrouleur de sangle (102) et le second enrouleur de sangle (106) sont respectivement fixés à une première distance d'une première partie d'extrémité au voisinage de la première partie d'extrémité et à une seconde distance d'une seconde partie d'extrémité au voisinage de la seconde partie d'extrémité d'un élément de support.

2. Dispositif de fixation (100) selon la revendication 1, dans lequel l'élément de support (101) est une barre de support.

3. Dispositif de fixation (100) selon l'une des revendications 1 ou 2, dans lequel la ferrure (104) est montée sur une partie d'extrémité de la sangle enroulable (103).

4. Dispositif de fixation (100) selon l'une des revendications 1 à 3, comportant une pluralité de ferrures montées à différents endroits de la sangle enroulable (103).

5. Dispositif de fixation (100) selon l'une des revendications 1 à 4, comportant un élément de support supplémentaire, dans lequel le second enrouleur de sangle (106) est fixé sur l'élément de support supplémentaire (101).

6. Dispositif de fixation (100) selon l'une des revendications 1 à 5, dans lequel l'élément de support (101) est un corps rigide, aplati et étendu longitudinalement.

7. Dispositif de fixation (100) selon l'une des revendications 1 à 6, dans lequel l'élément de support (101) comporte une partie coudée (110) sur une première partie d'extrémité, et dans lequel l'élément de support (101) comporte une partie coudée (111) sur une seconde partie d'extrémité.

8. Dispositif de fixation (100) selon la revendication 7, dans lequel le premier enrouleur de sangle (102) est fixé sur la partie coudée (110) de la première partie d'extrémité de l'élément de support (101), et dans lequel le second enrouleur de sangle (106) est fixé sur la partie coudée (111) de la seconde partie d'extrémité de l'élément de support (101).

9. Dispositif de fixation (100) selon l'une des revendications 1 à 8, comportant en outre au moins un enrouleur de sangle supplémentaire muni d'une sangle enroulable (103) et d'une ferrure (104), dans lequel ledit au moins un enrouleur de sangle supplémentaire est fixé sur l'élément de support (101).

10. Dispositif de fixation (100) selon l'une des revendications 1 à 9, dans lequel le premier enrouleur de sangle (102) comporte un mécanisme à ressort agencé de telle sorte qu'il fait rentrer la sangle (103) jusqu'à une longueur pouvant être prédéterminée afin de tendre ladite sangle (103).

11. Dispositif de fixation (100) selon l'une des revendications 1 à 10, dans lequel le premier enrouleur de sangle (102) est agencé de telle sorte que lorsque la ferrure (104) est couplée à une structure de fixation (601, 602) ou à un chariot à fixer (300), il empêche un déroulement de la sangle (103) autour d'une zone angulaire supérieure à une zone prédéterminée lorsqu'une force extérieure ayant une composante de force perpendiculaire à l'élément de support (101) est appliquée audit chariot à fixer (300).

12. Dispositif de fixation (100) selon l'une des revendications 1 à 11, dans lequel le premier enrouleur de sangle (102) comporte un embrayage centrifuge agencé de telle sorte que lorsque la ferrure (104) est couplée à une structure de fixation (601, 602) ou à un chariot à fixer (300), il empêche un déroulement de la sangle (103) autour d'une zone angulaire supérieure à une zone prédéterminée lorsqu'une force extérieure est appliquée audit chariot à fixer (300).

13. Dispositif de fixation (100) selon l'une des revendications 1 à 12, comportant un mécanisme pour le blocage manuel de la sangle (103).

14. Dispositif de fixation (100) selon l'une des revendications 1 à 13, dans lequel l'élément de support (101) comporte un matériau amortisseur (112) dans une zone de surface destinée à être placée sur un chariot à fixer (300).

15. Dispositif de fixation (100) selon l'une des revendications 1 à 14, dans lequel l'élément de support (101) comporte un matériau antidérapant (112) dans une zone de surface destinée à être placée sur un chariot à fixer (300).

16. Procédé pour fabriquer un dispositif de fixation (100) pour la fixation d'un chariot sur une structure de fixation (601, 602), le procédé comportant les étapes consistant à :
agencer un premier enrouleur de sangle (102) du dispositif de fixation de telle sorte que lorsque l'élément de support (101) est monté en force sur le chariot à fixer (300), et qu'une ferrure (104) d'un premier enrouleur de sangle (102) est fixée sur une structure de fixation (601, 602) sur laquelle ledit chariot à fixer (300) doit être fixé, il empêche un déroulement d'une sangle (103) dudit premier enrouleur de sangle (102) autour d'une zone angulaire supérieure à une zone prédéterminée lorsqu'une force extérieure ayant une composante de force agissant perpendiculairement vers le haut est appliquée sur ledit chariot à fixer (300),
monter une ferrure (104) du premier enrouleur de sangle (102) sur une sangle enroulable (103) du premier enrouleur de sangle (102),
monter une ferrure (108) d'un second enrouleur de sangle (106) sur une sangle enroulable (107) du second enrouleur de sangle (106),
**caractérisé en ce que**
le premier enrouleur de sangle (102) du dispositif de fixation (100) est fixé sur une première partie d'extrémité ou à une première distance d'une première partie d'extrémité au voisinage de la première partie d'extrémité d'un élément de support (101) du dispositif de fixation (100),
le second enrouleur de sangle (106) du dispositif de fixation (100) est fixé sur une seconde partie d'extrémité ou à une seconde distance d'une seconde partie d'extrémité au voisinage de la seconde partie d'extrémité d'un élément de support du dispositif de fixation (100).

17. Utilisation d'un dispositif de fixation (100) selon l'une des revendications 1 à 15 pour la fixation d'un chariot (300).

18. Utilisation d'un dispositif de fixation selon la revendication 17, dans laquelle le chariot (300) est fixé sur une structure de fixation (601, 602) dans un avion.

19. Utilisation d'un dispositif de fixation selon la revendication 18, dans laquelle la structure de fixation (601, 602) est choisie parmi le groupe constitué de
une ferrure sur un siège passager,
une ferrure sur une paroi, et
une ferrure sur un plancher
d'un avion.
